# EUROPÄISCHE PATENTSCHRIFT

(11) **EP 1 000 450 B1**
(45) Veröffentlichungstag und Bekanntmachung des Hinweises auf die Patenterteilung: **09.12.2009**
(21) Anmeldenummer: 98948757.4
(22) Anmeldetag: 30.07.1998
(51) Int. Cl.: H02B 13/045

(54) **DURCHFÜHRUNGSWANDLER FÜR METALLGEKAPSELTE, LUFTISOLIERTE MITTELSPANNUNGS-SCHALTANLAGE**
BUSHING-TYPE CURRENT TRANSFORMER FOR AN AIR-INSULATED METAL-ENCAPSULATED MIDDLE VOLTAGE SWITCHING STATION
TRANSDUCTEUR DE TRAVERSEE POUR INSTALLATION DE DISTRIBUTION MOYENNE TENSION ISOLEE PAR AIR, SOUS ENVELOPPE METALLIQUE

(30) Priorität: 31.07.1997 DE 29714253 U
(43) Veröffentlichungstag der Anmeldung: 17.05.2000
(73) Patentinhaber: SIEMENS AKTIENGESELLSCHAFT, 80333 München (DE)
(72) Erfinder: KOPKE, Volker, D-91054 Bükenhof (DE); SCHUDT, Karl, D-61203 Reichelsheim (DE); BISCHUR, Olaf, D-63762 Grossostheim (DE); MOSLER, Thomas, D-60594 Frankfurt (DE); DÄUMLING, Holger, D-22885 Barsbüttel (DE); STOLZ, Rainer, D-63477 Maintal (DE)
(86) Internationale Anmeldenummer: PCT/DE1998/002288
(87) Internationale Veröffentlichungsnummer: WO 1999/007047

(56) Entgegenhaltungen:
- EP-A- 0 446 837
- DE-A- 3 313 192
- DE-A- 19 502 061
- DE-B- 2 255 532

## Beschreibung

Die Erfindung betrifft eine Metallgekapselte, luftisolierte Mittelspannungs-Schaltanlage mit einer der Anzahl von Phasen entsprechenden Zahl von Durchführungswandlern mit Kabelanschlüssen, wobei die Durchführungswandler mit einem Wandler-Trageblech lösbar verbunden sind.

In der eingangs definierten metallgekapselten, luftisolierten Mittelspannungs-Schaltanlage dienen die Durchführungswandler zur Herstellung der elektrischen Verbindung zwischen den Kabelanschlüssen und den Schaltgeräten innerhalb der Mittelspannungs-Schaltanlage. Mit den Durchführungswandlern sind die Stromverhältnisse der einzelnen Phasen innerhalb der Mittelspannungs-Schaltanlage entsprechend zu überwachen.

Ein Durchführungswandler der eingangs definierten Art ist beispielsweise durch die EP 0 446 837 A1 bekannt. Der einzig dargestellte Durchführungswandler weist hier im Bereich seiner Befestigung an der Gehäusewandung ein quaderförmiges Teil auf, daß an der Gehäusewandung mittels einer Befestigungsschraube lagefixiert ist. Die Positionierung mehrerer solcher Durchführungswandler nebeneinander bedingt eine sehr genaue Abstimmung der Montagebedingungen zueinander, wobei insbesondere die Gewindebohrungen und die äußeren Konturen der Durchführungswandler engen Meßtoleranzen unterliegen.

Die der Erfindung zugrunde liegende Aufgabe besteht darin, einen Durchführungswandler zu definieren, der einerseits den elektrischen Verhältnissen zur Überwachung sämtlicher Betriebszustände der Mittelspannungs-Schaltanlage entspricht und außerdem die Konstruktion dieser Durchführungswandler erheblich zu vereinfachen, ohne jedoch die in dieser Technik üblichen Sicherheitsanforderungen einzuschränken. Erfindungsgemäß wird dies durch die Merkmale
1.1 der Durchführungswandler weist eine quaderförmige Wandler-Außenkontur auf, an der sich eine ebenfalls quaderförmige Wandler-Innenkontur anschließt,
1.2 zwischen der Wandler-Außenkontur und der Wandler-Innenkontur ist ein Wandler-Klemmschlitz vorgesehen,
1.3 die Wandler-Innenkontur weist im Anlagebereich zum Wandler-Trageblech eine Wandler-Führungskontur auf, die durch eine Ausnehmung des Wandler-Trageblechs hindurch führt und zum freien Bereich hin mit der von der Wandler-Außenkontur abgewandten Längsfläche trapezförmig verjüngt ist,
1.4 der Wandler-Innenkontur schließt sich ein quaderförmiger Hohlkörper an, der im Bereich des Kabelanschlusses quer zu seiner Längsrichtung mit einer ersten Halbrundkontur abschließt,
1.5 der quaderförmige Hohlkörper ist im entgegengesetzten Bereich des Kabelanschlusses mit einer die Kontur desselben überragenden Befestigungsplatte ausgestattet,
1.6 der Kabelanschluß weist eine zur Längsrichtung des quaderförmigen Hohlkörpers rechtwinklig angeordnete konzentrische Außenkontur auf, die im Zentrum einen gradlinigen Anschlußbereich mit einer Zwei- bzw. Dreipunktbefestigung enthält, erfüllt.

Zwischen der quaderförmigen Wandler-Außenkontur, an der sich die ebenfalls quaderförmige Wandler-Innenkontur anschließt, ist der Wandler-Klemmschlitz vorgesehen, in den nach Einbau der Durchführungswandler in die Mittelspannungs-Schaltanlage ein Blendenblech eingeschoben wird. Mit dem beispielsweise von unter her einschiebbaren Blendenblech sind die im allgemeinen nebeneinander eingebauten Durchführungsstützer in besonderer Weise zueinander lagefixiert. Mit der konzentrischen Querschnittskontur innerhalb des Wandler-Klemmschlitzes werden weite Bereiche der Wandler-Außenkontur und der Wandler-Innenkontur von dem eingeschobenen Blendenblech überdeckt. Damit ist eine besonders kompakte Einbauweise der Durchführungswandler innerhalb der Mittelspannungs-Schaltanlage erreicht. Diesem Zweck dient darüber hinaus auch die Wandler-Führungskontur, die mit der nach außen hin sich verjüngenden Längsfläche mit dem Eingriff in das Wandler-Trageblech praktisch den Durchführungswandler selbstzentrierend lagefixiert. Die Wandler-Führungskontur dient beispielsweise auch zum Herausführen von Leitungen aus dem Niederspannungsbereich und zur kapazitiven Anzeige vorhandener Ströme in der Mittelspannungs-Schaltanlage. Mit der sich aus der Kombination der quaderförmigen Wandler-Innenkontur mit dem ebenfalls quaderförmigen Hohlkörper und dem Befestigungsblech ergebenden Gesamtauflagefläche ist der Durchführungswandler insgesamt als kompakte Funktionseinheit auf dem Wandler-Trageblech sicher positioniert.

Mit der rechtwinklig zum quaderförmigen Hohlkörper angeordneten konzentrischen Außenkontur, die im Zentrum den gradlinigen Anschlußbereich mit einer je nach Strombelastung Zwei- bzw. Dreipunktbefestigung für den elektrischen Leiter zu den Schaltgeräten aufweist, ist ebenfalls eine Optimierung des Kabelanschlusses hinsichtlich auftretender Belastungen im Betriebszustand erreicht.

Gemäß einer vorteilhaften Ausgestaltung der Erfindung sind die Merkmale
2.1 die Wandler-Innenkontur ist im Bereich des angrenzenden quaderförmigen Hohlkörpers gegenüberliegend der Wandlerführungskontur mit einer zweiten Halbrundkontur versehen,
2.2 die Wandler-Innenkontur weist einen quer zur Längsrichtung des quaderförmigen Hohlkörpers in der Ebene des Wandler-Trageblechs angeordneten Befestigungswinkel auf, vorgesehen.

Mit der gegenüberliegend der Wandlerführungskontur für den quaderförmigen Hohlkörper vorgesehenen zweiten Halbrundkontur ist die Wandler-Innenkontur im Hinblick auf die Beanspruchungen des Durchführungswandlers im Betriebszustand der Mittelspannungs-Schaltanlage trotz geringerem Materielaufwands ein sehr stabiles Gebilde, das mit dem Befestigungswinkel in der Ebene des Wandler-Trageblechs in einfacher Weise in der Mittelspannungs-Schaltanlage lösbar zu befestigen ist.

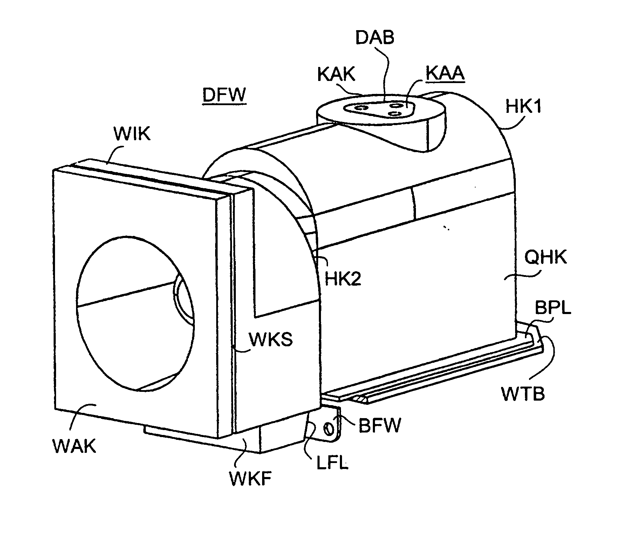

## Patentansprüche

1. Metallgekapselte, luftisolierte Mittelspannungs-Schaltanlage mit einer der Anzahl von Phasen entsprechenden Zahl von Durchführungswandlern mit Kabelanschlüssen, wobei die Durchführungswandler mit einem Wandler-Trageblech lösbar verbunden sind,
**gekennzeichnet durch** die Merkmale
1.1 der Durchführungswandler (DFW) weist eine quaderförmige Wandler-Außenkontur (WAK) auf, an der sich eine ebenfalls quaderförmige Wandler-Innenkontur (WIK) anschließt,
1.2 zwischen der Wandler-Außenkontur (WAK) und der Wandler-Innenkontur (WIK) ist ein Wandler-Klemmschlitz (WKS) vorgesehen,
1.3 die Wandler-Innenkontur (WIK) weist im Anlagebereich zum Wandler-Trageblech (WTB) eine Wandler-Führungskontur (WFK) auf, die **durch** eine Ausnehmung des Wandler-Trageblechs (WTB) hindurch führt und zum freien Bereich hin mit der von der Wandler-Außenkontur (WAK) abgewandten Längsfläche (LFL) trapezförmig verjüngt ist,
1.4 der Wandler-Innenkontur (WIK) schließt sich ein quaderförmiger Hohlkörper (QHK) an, der im Bereich des Kabelanschlusses (KAA) quer zu seiner Längsrichtung mit einer ersten Halbrundkontur (HK1) abschließt,
1.5 der quaderförmige Hohlkörper (QHK) ist im entgegengesetzten Bereich des Kabelanschlusses (KAA) mit einer die Kontur desselben überragenden Befestigungsplatte (BPL) ausgestattet,
1.6 der Kabelanschluß (KAA) weist eine zur Längsrichtung des quaderförmigen Hohlkörpers (QHK) rechtwinklig angeordnete konzentrische Außenkontur (KAK) auf, die im Zentrum einen gradlinigen Anschlußbereich (DAB) mit einer Zwei- bzw. Dreipunktbefestigung enthält.

2. Metallgekapselte, luftisolierte Mittelspannungs-Schaltanlage nach Anspruch 1,
**gekennzeichnet durch** die Merkmale
2.1 die Wandler-Innenkontur (WIK) ist im Bereich des angrenzenden quaderförmigen Hohlkörpers (QHK) gegenüberliegend der Wandlerführungskontur (WFK) mit einer zweiten Halbrundkontur (HK2) versehen,
2.2 die Wandler-Innenkontur (WIK) weist einen quer zur Längsrichtung des quaderförmigen Hohlkörpers (QHK) in der Ebene des Wandler-Trageblechs (WTB) angeordneten Befestigungswinkel (BFW) auf.

## Claims

1. Metal-encapsulated, air-insulated medium-voltage switchgear assembly having a number of bushing-type transformers corresponding to the number of phases, and which bushing-type transformers have cable connections and are detachably connected to a transformer mounting plate,
**characterized by** the following features
1.1 the bushing-type transformer (DFW) has a cuboid transformer external contour (WAK) to which a likewise cuboid transformer internal contour (WIK) is adjacent,
1.2 a transformer clamping slot (WKS) is provided between the transformer external contour (WAK) and the transformer internal contour (WIK),
1.3 the transformer internal contour (WIK) has, in the contact region with the transformer mounting plate (WTB), a transformer guide contour (WFK) which passes through a recess in the transformer mounting plate (WTB) and whose longitudinal surface (WFL) faces away from the transformer external contour (WAK) tapers trapezoidally towards the free region,
1.4 the transformer internal contour (WIK) is adjacent to a cuboid hollow body (QHK) which terminates with a first half-round contour (HK1) in the region of the cable connection (KAA) and transversely with respect to its longitudinal direction,
1.5 the cuboid hollow body (QHK) is equipped in the opposite region of the cable connection (KAA) with an attachment plate (BPL) which overhangs the contour of said hollow body (QHK),
1.6 the cable connection (KAA) has a concentric external contour (KAK), which is arranged at right angles to the longitudinal direction of the cuboid hollow body (QHK) and contains, in the centre, a linear connecting region (DAB) with a two or three-point attachment.

2. Metal-encapsulated, air-insulated, medium-voltage switchgear assembly according to Claim 1,
**characterized by** the following features:
2.1 the transformer internal contour (WIK) is provided with a second half-round contour (HK2) in the region of the adjacent cuboid hollow body (QHK) opposite the transformer guide contour (WFK),
2.2 the transformer internal contour (WIK) has an attachment bracket (BFW) which is arranged transversely with respect to the longitudinal direction of the cuboid hollow body (QHK), in the plane of the transformer mounting plate (WTB).

## Revendications

1. Installation de distribution de moyenne tension isolée par de l'air et sous enveloppe métallique, ayant un nombre, correspondant au nombre de phases, de transducteurs de traversées ayant des bornes de câble, les transducteurs de traversée étant assemblés de manière amovible à une tôle support de transducteur
**caractérisée par** les caractéristiques
1.1 le transducteur ( DFW ) de traversée a un contour ( WAK ) extérieur de transducteur parallélépipédique, qui se raccorde à un contour ( WIK ) intérieur de transducteur également parallélépipédique,
1.2 une fente ( WKS ) de serrage de transducteur est prévu entre le contour ( WAK ) extérieur de transducteur et le contour ( WIK ) intérieur de transducteur,
1.3 le contour ( WIK ) intérieur de transducteur a, dans la partie de contact avec la tôle ( WTB ) de support de transducteur, un contour ( WFK ) de guidage de transducteur qui passe dans un évidement de la tôle ( WTB ) de support de transducteur et qui se rétrécit trapézoïdalement en direction de la partie libre par la surface ( LFL ) longitudinale éloignée du contour ( WAK ) extérieur de transducteur,
1.4 le contour ( WIK ) intérieur du transducteur se raccorde à un corps ( QHK ) creux parallélépipédique qui se termine dans la partie de la borne ( KAA ) de câble transversalement à sa direction longitudinale par une contour ( HK1 ) hémi-circulaire,
1.5 le corps ( QHK ) creux parallélépipédique est équipé dans la partie opposée de la borne ( KAA ) de câble d'une plaque ( BPL ) de fixation en dépassant du contour,
1.6 la borne ( KAA ) de câble a un contour ( KAK ) extérieur concentrique, disposé à angle droit par rapport à la direction longitudinale du corps ( QHK ) creux parallélépipédique et comportant au centre une partie ( DAB ) de borne linéaire ayant une fixation à deux points ou à trois points.

2. Installation de distribution de moyenne tension isolée par de l'air et sous enveloppe métallique suivant la revendication 1,
**caractérisée par** les caractéristiques
2.1 le contour ( WIK ) intérieur du transducteur est, dans la partie du corps ( QHK ) voisin parallélépipédique, muni d'une manière opposée au contour ( WFK ) de guidage du transducteur d'un deuxième contour ( HK2 ) hémi-circulaire,
2.2 le contour ( WIK ) intérieur du transducteur a une équerre ( BFW ) de fixation disposée dans le plan de la tôle ( WTB ) de support de transducteur transversalement à la direction longitudinale du corps ( QHK ) creux parallélépipédique.
